# NEUE EUROPÄISCHE PATENTSCHRIFT

(11) **EP 2 093 168 B2**
(45) Veröffentlichungstag und Bekanntmachung des Hinweises auf die Entscheidung über den Einspruch: **28.08.2019**
(45) Hinweis auf die Patenterteilung: 11.05.2011
(21) Anmeldenummer: 08022034.6
(22) Anmeldetag: 18.12.2008
(51) Int. Cl.: B65G 29/00

(54) **Fördereinrichtung**
Transport device
Dispositif de transport

(30) Priorität: 23.02.2008 DE 102008010895
(43) Veröffentlichungstag der Anmeldung: 26.08.2009
(73) Patentinhaber: Krones AG, 93073 Neutraubling (DE)
(72) Erfinder: Braun, Franz, 93053 Regensburg (DE); Laumer, Roland, 93047 Regensburg (DE)
(74) Vertreter: Grünecker Patent- und Rechtsanwälte PartG mbB

(56) Entgegenhaltungen:
- WO-A-00/39037
- WO-A-2006/087088
- DE-U1-202005 002 469

## Beschreibung

Die Erfindung bezieht sich auf eine Fördereinrichtung der im Oberbegriff des Anspruchs 1 erläuterten Art.

Eine derartige Fördereinrichtung ist aus der WO 00/39037 bekannt. Die bekannte Fördereinrichtung beschreibt einen Karussellförderer für die Glasherstellung, der eine Basis aufweist. Die Basis weist eine obere Stirnseite auf, auf der eine Säule montiert ist. Dies erfolgt, wie den Zeichnungen zu entnehmen ist, durch Anschrauben eines Basisflansches der Säule im Bereich einer Aufnahmevertiefung der oberen Stirnseite. An der Säule sind zwei Lager vorgesehen, wobei das untere Lager als Axialdrucklager ausgebildet ist, übernimmt somit die Krafteinleitung in die Basis. Im Bereich der Säule ist der Antriebsmotor vorgesehen, wobei der Motor einen Stator aufweist, der einstückig mit der Basis ausgebildet ist. Der Rotor ist mit einem unteren Teil des Sternrades verbunden.

Rotor und Stator sind in einem Gehäuse angeordnet, das einstückig mit der Basis ausgebildet ist, jedoch auf die obere Stirnseite der Basis aufgesetzt ist.

Eine weitere Fördereinrichtung ist aus der WO 2006/087088 bekannt. Die bekannte Fördereinrichtung ist Teil eines Transportsystems für Gefäßbehandlungsmaschinen, insbesondere für Flaschenfüller. Das Transportsystem enthält antreibbare Zuführ- und Abführsteme, die auf säulenähnlichen Traggehäusen ruhen. Die Traggehäuse sind im Wesentlichen rohrförmig ausgebildet und nehmen beispielsweise den Antriebsmotor für die Fördereinrichtung mitsamt seinem Gehäuse auf. Der Antriebsmotor muss korrekt an seiner vorbestimmten Stelle innerhalb des äußeren Traggehäuses justiert werden.

Der Erfindung liegt die Aufgabe zugrunde, eine Fördereinrichtung der genannten Art montage- und wartungsfreundlicher auszugestalten.

Die Aufgabe wird durch die im Anspruch 1 angegebenen Merkmale gelöst.

Durch die erfindungsgemäße Ausgestaltung übernimmt der Motor, d.h. sein Gehäuse, auch eine statische Funktion als Teil des Tragegestells. Dadurch können die zusätzlichen Aufwendungen für die Herstellung und die Montage eines gesonderten Außengehäuses entfallen. Der Motor ist jederzeit für Wartungs- und/oder Reparaturzwecke zugänglich.

Vorteilhafte Weiterbildungen der Erfindung sind den Unteransprüchen zu entnehmen.

Durch seine Form eignet sich das Motorgehäuse ideal zur Verwendung als Teil einer Tragsäule eines Stemradförderers.

Die erfindungsgemäße Ausgestaltung eignet sich besonders für einen Direktantrieb, wobei gleichzeitig die Steuereinheit für den Motor ebenfalls im Motorgehäuse untergebracht werden können.

Das Motorgehäuse kann analog zur Tragsäule des gattungsbildenden Standes der Technik mit zusätzlichen Teilen zu Traggestellen zusammengestellt werden, die optimal an die zu unterstützende Fördereinrichtung angepasst sind, wobei die Befestigung des Motorgehäuses an den anderen Teilen zweckmäßigerweise durch Verschrauben erfolgt.

Ausführungsbeispiele der Erfindung werden nachfolgend anhand der Zeichnungen näher erläutert. Es zeigen:
- Fig. 1: eine perspektivische Darstellung eines Transportsystems mit einer erfindungsgemäßen Fördereinrichtung;
- Fig. 2: ein erstes Ausführungsbeispiel einer Fördereinrichtung im Längsschnitt;
- Fig. 3: ein zweites Ausführungsbeispiel einer erfindungsgemäßen Fördereinrichtung im Längsschnitt; und
- Fig. 4: die Detaildarstellung "A" aus den Figuren 2 und 3.

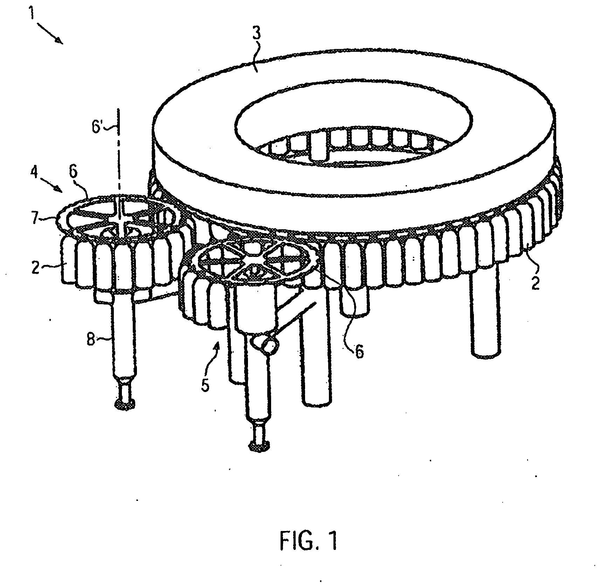

Fig. 1 zeigt in perspektivischer und stark schematisierter Darstellung ein Transportsystem 1 zum Handhaben von Getränkebehältem 2, insbesondere Flaschen, als bevorzugtes Einsatzgebiet der vorliegenden Erfindung. Das Transportsystem 1 enthält im dargestellten Ausführungsbeispiel eine Behälter-Behandlungsmaschine 3, z.B. einen Flaschenfüller (ohne Kesseloberteil). Die Behälter 2 werden der Behandlungsmaschine 3 über eine erste Fördereinrichtung 4 zugeführt und verlassen die Behandlungsmaschine 3 mit Hilfe einer zweiten Fördereinrichtung 5.

Sowohl die Behandlungsmaschine 3 als auch die Fördereinrichtungen 4 und 5 sind stark schematisiert dargestellt. Zu sehen ist jedoch, dass beide Fördereinrichtungen 4, 5 als Stemradförderer ausgebildet sind und jeweils einen Förderstem 6 aufweisen, der um eine vertikale Achse 6' rotierend angetrieben ist und an seinem Umfang eine Vielzahl von Aufnahmeelementen 7 aufweist, durch die die Behälter 2 ergriffen bzw. geführt und transportiert werden können.

Die Behälter 2 sind im dargestellten Ausführungsbeispiel Flaschen und die Aufnahmeelemente 7 sind für ein sog. "Neckhandling" ausgelegt, d.h. die Flaschen werden im Bereich ihres Flaschenhalses, bevorzugt unter einem dort vorgesehenen Wulst, ergriffen und über den vorbestimmten Förderweg gefördert. Da beide Fördereinrichtungen 4, 5 im Wesentlichen identisch ausgebildet sind, wird nachfolgend lediglich die Fördereinrichtung 4 beschrieben.

Die Fördereinrichtung 4 enthält weiterhin ein Traggestell 8, mit dem der Förderstem 6 auf einer Unterlage, beispielsweise dem Fußboden, abgestützt wird.

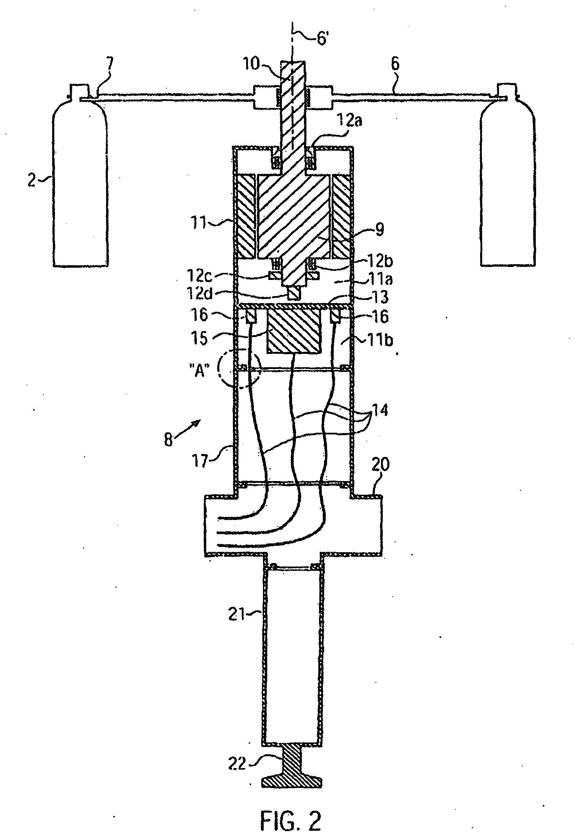

Wie auch in Verbindung mit Fig. 2 ersichtlich, ist das Traggestell 8 als Tragsäule ausgebildet, die das Sternrad 6 mittig unterstützt. Die Tragsäule des Traggestells 8 umfasst einen Antriebsmotor 9 für das Sternrad 6, der im dargestellten Ausführungsbeispiel für einen Direktantrieb des Sternrades 6 ausgebildet ist. Der Motor 9 ragt mit seiner Motorwelle 10 in den Bereich des Sternrades 6, so dass das Sternrad 6 an der Motorwelle 10 angeklemmt oder anderweitig befestigt werden kann. Der Motor 9 enthält ein Gehäuse 11, das erfindungsgemäß ein Teil des Traggestells 8 ist, d.h. außer einer Halte- und Schutzfunktion für den Motor 9 auch eine statische Unterstützungsfunktion für das Sternrad 6 erfüllt. Zu diesem Zweck ist der Motor 9 in üblicher Weise innerhalb des Gehäuses 11 an vorbestimmter Stelle fixiert und mit stehendem Gehäuse 11 montiert, wobei sich die Motorwelle 10 durch ein abgedichtetes Lager 12a an der oberen Stirnseite des Motorgehäuses 11 erstreckt. Ein weiteres Lager 12b, sowie ggf. eine Bremse 12c und ein Geber 12d sind an der Unterseite angeordnet.

Das Motorgehäuse 11 kann jede geeignete Form aufweisen, ist jedoch bevorzugt zylindrisch, insbesondere kreiszylindrisch, ausgebildet. Das Motorgehäuse 11 enthält ein bevorzugt abgedichtetes Abteil 11a, in dem der Motor 9, das obere und untere Lager 12a, 12b, Bremse 12c und Geber 12d untergebracht sind. Das Abteil 11a ist nach unten hin durch eine Trennwand 13 verschlossen. Die Trennwand 13 bildet ein zweites Abteil 11 b des Motorgehäuses 11, das nach unten offen ist, so dass Versorgungsleitungen 14 herangeführt werden können. Im zweiten Abteil 11 b befinden sich beispielsweise eine Steuereinrichtung 15 sowie Anschlüsse 16 für Strom, Druckluft oder dergleichen. Mit der Druckluft kann das erste Abteil 11 a mit Überdruck versehen werden.

Im dargestellten Ausführungsbeispiel enthält das Traggestell 8 ein Distanzstück 17, das bevorzugt in Form und Durchmesser dem Motorgehäuse 11 angepasst ist und das Motorgehäuse 11 nach unten verlängert. Das Distanzstück 17 sowie die nachfolgend noch zu beschreibenden weiteren Traggestellelemente sind bevorzugt miteinander und mit dem Motorgehäuse 11 verschraubt.

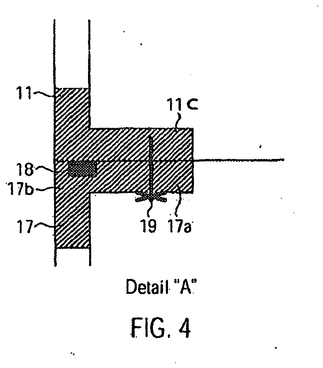

Ein Detail A einer Verbindung ist in Fig. 4 zu sehen. Fig. 4 zeigt die Verschraubung zwischen dem Motorgehäuse 11 und dem Distanzstück 17. Zu diesem Zweck sind sowohl das Motorgehäuse 11 als auch das Distanzstück 17 mit jeweils einem ringförmigen Flansch 11c, 17a versehen, die unter Zwischenlegung einer in einer Dichtungsnut 17b aufgenommenen Dichtung 18, z. B. einem O-Ring, aufeinanderliegend angeordnet und mit Hilfe üblicher Schraubverbindungen 19 miteinander verschraubt sind. Die in Fig. 4 dargestellte Verschraubung kann zwischen allen Elementen des Traggestelles 8 verwirklicht werden.

Unterhalb des Distanzstückes 17 (oder auch unterhalb des Motorgehäuses 11) ist im dargestellten Ausführungsbeispiel ein Anbringungselement 20 vorgesehen. Das Anbringungselement 20 ist eine Art rohrförmiges Zwischenstück und dient einerseits dazu, die Versorgungsleitungen 14 zu- bzw. abzuführen und dient weiterhin als Verbindungsstück zum Verbinden des Traggestelles 8 mit benachbarten Traggestellen von weiteren Fördereinrichtungen oder mit Traggestellen der zugehörigen Behandlungsmaschine oder dergleichen.

Das Traggestell 8 enthält weiterhin einen Standfuß 21, der ebenfalls rohrförmig ausgebildet sein kann und mit einem Höhenjustierelement 22, hier nur schematisch dargestellt, auf den Boden abgestützt ist, .

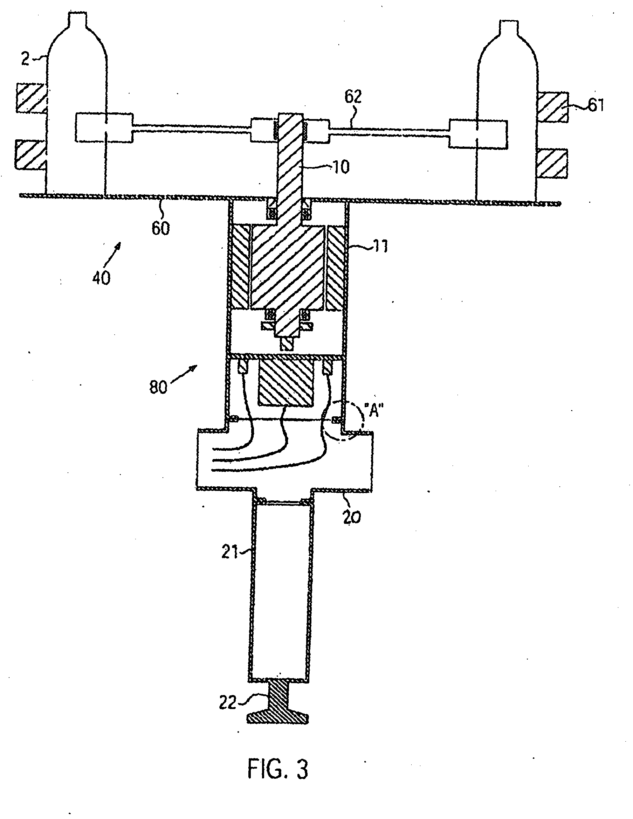

Fig. 3 zeigt eine weitere Fördereinrichtung 40, die sich von der Fördereinrichtung 4, 5 durch eine abweichende Art der Förderung unterscheidet, wobei gleiche bzw. vergleichbare Bauteile mit den gleichen Bezugszeichen gekennzeichnet und nicht nochmals erläutert sind. Die als Stemradförderer ausgebildete Fördereinrichtung 40 ist für ein bodenunterstütztes Fördern der Behälter 2 ausgelegt, wobei ein stationärer Tragteller 60 vorgesehen ist, auf dem Standplätze für die Behälter vorgesehen sind. Ein umfangsseitiges Geländer 61 sowie sternförmig angeordnete Halterungen 62 dienen der Fixierung und Führung der Behälter 2. Die Halterungen 62 sind als Förderelemente ausgebildet und mit der Motorwelle 10 antriebsübertragend verbunden. Das als Teil eines Traggestells 80 ausgebildete Motorgehäuse 11 ist fest mit dem Tragteller 60 verbunden. Da das Traggestell 80 der Fördereinrichtung 40 eine geringere vertikale Höhe erfordert, ist hier das Motorgehäuse 11 direkt mit dem Anbindungselement 20 verbunden, d.h. hier ist kein Distanzstück vorgesehen. Die übrige Ausgestaltung mit dem Standfuß 21 und dem Justierelement 22 entspricht dem Ausführungsbeispiel gemäß Fig. 2.

In Abwandlung der beschriebenen und bezeichneten Ausführungsbeispiele kann die Ausgestaltung des Traggestells nicht nur bei Sternförderern, sondern auch bei anderen Förderern oder bei Behandlungsmaschinen eingesetzt werden. Das Traggestell muss nicht unbedingt aus rohrförmigen Elementen zusammengesetzt sein, sondern kann beispielsweise massive Streben umfassen, die am Motorgehäuse angeordnet sind. Die Steuerung kann weiterhin außerhalb des Motorgehäuses untergebracht werden.

## Patentansprüche

1. Fördereinrichtung (4, 5, 40), mit einem Sternrad (6) zum Handhaben von Getränkebehältern (2), das um eine vertikale Achse (6') rotierend angetrieben ist und an seinem Umfang eine Vielzahl von Aufnahmeelementen (7) aufweist, mit einem Antriebsmotor (9) zum Antreiben des Sternrads (6) mit Motorwelle (10) und Motorgehäuse (11) und einer lastaufnehmenden Tragsäule (8, 80) zum mittigen Abstützen des Sternrades (6) auf dem Fußboden, wobei das Sternrad (6) an der Motorwelle (10) befestigt ist, wobei die Tragsäule eine obere Stirnseite aufweist, wobei ein Teil der lastaufnehmenden Tragsäule (8, 80) als Motorgehäuse (11) ausgebildet ist und der als Motorgehäuse ausgebildete Teil der Tragsäule (8, 80) eine obere Stirnseite aufweist, die auch die obere Stirnseite der Tragsäule (8, 80) bildet, und wobei der Antriebsmotor (9) an einer vorbestimmten Stelle im Inneren des als Motorgehäuse (11) ausgebildeten Teils der Tragsäule (8, 80) fixiert ist,
**dadurch gekennzeichnet, dass**
sich die Motorwelle (10) durch ein abgedichtetes Lager (12a) an der oberen Stirnseite des als Motorgehäuse ausgebildeten Teils der Tragsäule erstreckt.

2. Fördereinrichtung nach Anspruch 1, **dadurch gekennzeichnet, dass** der Antriebsmotor (9) als Direktantrieb ausgebildet ist.

3. Fördereinrichtung nach einem der Ansprüche 1 oder 2, **dadurch gekennzeichnet, dass** das Motorgehäuse (11) eine Steuereinheit (15) für den Motor (9) aufweist.

4. Fördereinrichtung nach einem der Ansprüche 1 bis 3, **dadurch gekennzeichnet, dass** das Motorgehäuse (11) Verbindungselemente zur Verbindung mit anderen Teilen (17, 20, 21) der Tragsäule (8, 80) aufweist.

5. Fördereinrichtung nach Anspruch 4, **dadurch gekennzeichnet, dass** die Verbindungselemente einen Flansch (11c, 17a) enthalten.

6. Fördereinrichtung nach Anspruch 4 oder 5, **dadurch gekennzeichnet, dass** die Verbindungselemente eine Dichtung (18) enthalten.

7. Fördereinrichtung nach einem der Ansprüche 1 bis 6, **dadurch gekennzeichnet, dass** die Tragsäule (8, 80) ein Distanzstück (17) enthält, das mit dem Motorgehäuse (11) verbunden ist.

8. Fördereinrichtung nach einem der Ansprüche 1 bis 7, **dadurch gekennzeichnet, dass** die Tragsäule (8, 80) ein Anbindungselement (20) enthält, das mit dem Motorgehäuse (11) verbunden ist.

9. Fördereinrichtung nach einem der Ansprüche 1 bis 8, **dadurch gekennzeichnet, dass** das Motorgehäuse (11) mit anderen Teilen (17, 20, 21) der Tragsäule (8, 80) verschraubt ist.

## Claims

1. Conveyor system (4, 5, 40), with a star wheel (6) for handling beverage containers (2), which is driven so as to rotate about a vertical axis (6') and has a plurality of receptacle elements (7) on its circumference, with a drive motor (9) with a motor shaft (10) and motor housing (11) and a load-bearing support column (8, 80) for centrally supporting the star wheel (6) on the footboard, the star wheel (6) being fastened to the motor shaft (10), the support column having a top end face, wherein a part of the load-bearing support column (8, 80) constituting the motor housing (11) and the part of the support column (8, 80) constituting the motor housing having an top end face which also forms the top end face of the support column (8, 80), and wherein the drive motor (9) is secured at a predetermined point in the interior of the part of the support column (8, 80) constituting the motor housing (11), **characterised in that**
the motor shaft (10) extends through a sealed bearing (12a) on the top end face of the part of the support column constituting the motor housing (11).

2. Conveyor system as claimed in claim 1, **characterised in that** the drive motor (9) is provided in the form of a direct drive.

3. Conveyor system as claimed in claim 1 or 2, **characterised in that** the motor housing (11) has a control unit (15) for the motor (9).

4. Conveyor system as claimed in one of claims 1 to 3, **characterised in that** the motor housing (11) has connecting elements for connecting to other parts (17, 20, 21) of the support column (8, 80).

5. Conveyor system as claimed in claim 4, **characterised in that** the connecting elements contain a flange (11c, 17a).

6. Conveyor system as claimed in claim 4 or 5, **characterised in that** the connecting elements contain a seal (18).

7. Conveyor system as claimed in one of claims 1 to 6, **characterised in that** the support column (8, 80) contains a spacer (17) which is connected to the motor housing (11) .

8. Conveyor system as claimed in one of claims 1 to 7, **characterised in that** the support column (8, 80) contains a fastening element (20) which is connected to the motor housing (11).

9. Conveyor system as claimed in one of claims 1 to 8, **characterised in that** the motor housing (11) is screwed to other parts (17, 20, 21) of the support column (8, 80).

## Revendications

1. Convoyeur (4, 5, 40), avec une roue-étoile (6) pour la manipulation de récipients de boisson (2) qui est entraînée en rotation autour d'un axe vertical (6') et comporte sur son pourtour une pluralité d'éléments de réception (7), avec un moteur d'entraînement (9) pour l'entraînement de la roue-étoile (6) avec un arbre de moteur (10) et un carter de moteur (11) et un châssis porteur de charge (8, 80) pour l'appui centré de la roue-étoile (6) sur le plancher, étant précisé que la roue-étoile (6) est attachée sur l'arbre moteur (10), que le châssis porteur comporte un côté frontal supérieur, qu'une partie du châssis porteur de charge (8, 80) est conçue comme un carter de moteur (11) et la partie du châssis porteur (8, 80) conçue comme un carter de moteur comporte un côté frontal supérieur qui forme aussi le côté frontal supérieur du châssis porteur (8, 80), et que le moteur d'entraînement (9) est fixé à un endroit prédéfini à l'intérieur de la partie du châssis porteur (8, 80) conçue comme un carter de moteur (11),
**caractérisé en ce que**
l'arbre de moteur (10) traverse un palier étanche (12a) sur le côté frontal supérieur de la partie du châssis porteur conçue comme un carter de moteur.

2. Convoyeur selon la revendication 1, **caractérisé en ce que** le moteur d'entraînement (9) est conçue comme un entraînement direct.

3. Convoyeur selon l'une des revendications 1 ou 2, **caractérisé en ce que** le carter de moteur (11) comporte une unité de commande (15) pour le moteur (9).

4. Convoyeur selon l'une des revendications 1 à 3, **caractérisé en ce que** le carter de moteur (11) comporte des éléments de liaison à relier à d'autres parties (17, 20, 21) du châssis porteur (8, 80).

5. Convoyeur selon la revendication 4, **caractérisé en ce que** les éléments de liaison contiennent une bride (11c, 17a).

6. Convoyeur selon la revendication 4 ou 5, **caractérisé en ce que** les éléments de liaison contiennent un joint d'étanchéité (18).

7. Convoyeur selon l'une des revendications 1 à 6, **caractérisé en ce que** le châssis porteur (8, 80) contient une pièce d'écartement (17) qui est reliée au carter de moteur (11).

8. Convoyeur selon l'une des revendications 1 à 7, **caractérisé en ce que** le châssis porteur (8, 80) contient un élément de raccordement (20) qui est relié au carter de moteur (11).

9. Convoyeur selon l'une des revendications 1 à 8, **caractérisé en ce que** le carter de moteur (11) est relié par vissage à d'autres parties (17, 20, 21) du châssis porteur (8, 80).
